# EUROPEAN PATENT SPECIFICATION

(11) **EP 4 238 055 B1**
(45) Date of publication and mention of the grant of the patent: **09.12.2026**
(21) Application number: 21799019.1
(22) Date of filing: 25.10.2021
(51) Int. Cl.: G06T 7/10

(54) **DETECTION OF SPINE VERTEBRAE IN IMAGE DATA**
ERKENNUNG VON WIRBELN DER WIRBELSÄULE IN BILDDATEN
DÉTECTIONS DE VERTÈBRES DE COLONNE VERTÉBRALE DANS DES DONNÉES D'IMAGE

(30) Priority: 27.10.2020 US 202063106055 P
(43) Date of publication of application: 06.09.2023
(73) Proprietor: Koninklijke Philips N.V., 5656 AE Eindhoven (NL)
(72) Inventor: YAAKOBI, Amir, 5656 AE Eindhoven (NL); SILBERT, Ohad, 5656 AE Eindhoven (NL); ENGELHARD, Guy, 5656 AE Eindhoven (NL)
(74) Representative: Philips Intellectual Property & Standards
(86) International application number: PCT/EP2021/079444
(87) International publication number: WO 2022/090102

(56) References cited:
- MAXIM PISOV ET AL: "Keypoints Localization for Joint Vertebra Detection and Fracture Severity Quantification", ARXIV.ORG, CORNELL UNIVERSITY LIBRARY, 201 OLIN LIBRARY CORNELL UNIVERSITY ITHACA, NY 14853, 20 July 2020 (2020-07-20), XP081711433
- WINDSOR RHYDIAN ET AL: "The Ladder Algorithm: Finding Repetitive Structures in Medical Images by Induction", 2020 IEEE 17TH INTERNATIONAL SYMPOSIUM ON BIOMEDICAL IMAGING (ISBI), IEEE, 3 April 2020 (2020-04-03), pages 1729 - 1733, XP033773592, DOI: 10.1109/ISBI45749.2020.9098469

## Description

### FIELD

The following generally relates to medical imaging informatics and more particularly to detection of spine vertebrae in image data.

### BACKGROUND

When a radiologist reads an axial spine image that has not been annotated with the identification of the vertebrae, it is difficult for the radiologist to ascertain which vertebra is represented in the axial spine image without referring to a sagittal spine and/or other image to cross-reference the location of the axial spine image with respect to the spine. In one instance, the radiologist is tasked with manually annotating and/or counting vertebra centers. Unfortunately, this is tedious, time consuming and prone to human error. Automated vertebrae detection algorithms are described in Payer et al., "Vertebrae Localization and Segmentation with SpatialConfiguration-Net and U-Net," (2019), and Chen, "An Automatic Multi-stage System for Vertebra Segmentation and Labelling, (2019), and Lessmann et al., "Iterative fully convolutional neural networks," (2019). Unfortunately, these approaches require significant computing power. In view of at least the above, there is an unresolved need for another approach(s) for detecting and labelling spine vertebrae in volumetric image data.

Non-Patent Literature "Keypoints Localization for Joint Vertebra Detection and Fracture Severity Quantification", by MAXIM PISOV ET. AL. in ARXIV.ORG, CORNELL UNIVERSITY LIBRARY, 201 OLIN LIBRARY CORNELL UNIVERSITY ITHACA, NY 14853, 20 July 2020, discloses a recurrent algorithm to detect repetitive structures in natural images with high accuracy using little training data. The algorithm is used on the task of extracting vertebrae from whole spine magnetic resonance scans with only lumbar MR scans for training data.

Non-Patent Literature "The Ladder Algorithm: Finding Repetitive Structures in Medical Images by Induction", by WINDSOR RHYDIAN ET. AL. in 2020 IEEE 17TH INTERNATIONAL SYMPOSIUM ON BIOMEDICAL IMAGING (ISBI), IEEE, 3 April 2020, pages 1729-1733, discloses a method to identify the vertebral column in 3D CT and reducing the problem to 2D by producing the corresponding mid-sagittal slice to measure dimensions for each vertebra. A two-step algorithm allows to localize the vertebral column in 3D CT images and then to simultaneously detect individual vertebrae and quantify fractures in 2D. Neural networks are trained for both steps using a simple 6-keypoints based annotation scheme, which corresponds precisely to current medical recommendations.

### SUMMARY

Aspects described herein address the above-referenced problems and/or others.

The following describes a multi-stage approach for automated detection and labelling of spine vertebrae in volumetric image data.

In one aspect, a system according to claim 1 is disclosed. In another aspect, a system according to claim 9 is disclosed.

In one instance, all the detected bounding boxes, both the first set and the second set, are labeled either as Sacrum, C2 or "other" vertebra. This is at least because both C2 and the Sacrum vertebra have a unique shape and serve as anchors for the annotation of the vertebra after the detection of the bounding boxes.

In another aspect, a method according to claim 10 is disclosed.

In another aspect, a computer-readable storage medium according to claim 13 is disclosed.

Those skilled in the art will recognize still other aspects of the present application upon reading and understanding the attached description.

### BRIEF DESCRIPTION OF THE DRAWINGS

The invention may take form in various components and arrangements of components, and in various steps and arrangements of steps. The drawings are only for purposes of illustrating the embodiments and are not to be construed as limiting the invention.
FIG. 1 diagrammatically illustrates an example system with a vertebrae detection and labelling module that is configured to detect and label vertebrae of a spine in volumetric image data, in accordance with an embodiment(s) herein.
FIG. 2 diagrammatically illustrates an example of the vertebrae detection and labelling module of the system of FIG. 1, in accordance with an embodiment(s) herein.
FIG. 3 diagrammatically illustrates example method for detecting and labelling vertebrae of a spine in volumetric image data, in accordance with an embodiment(s) herein.

### DESCRIPTION OF EMBODIMENTS

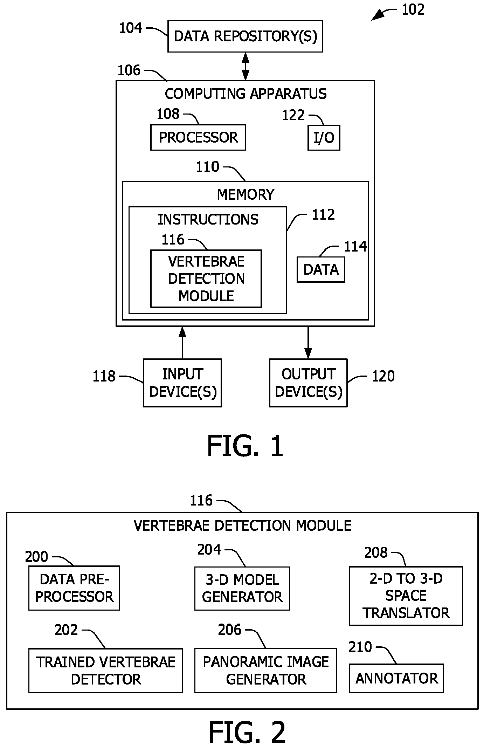

FIG. 1 diagrammatically illustrates an example system 102, in accordance with an embodiment(s) herein. The system 102 includes at least a data repository(s) 104 and a computing apparatus 106.

The data repository(s) 104 includes a physical storage medium configured to store at least digital medical images. In one instance, the data repository(s) 104 is for a healthcare entity(s) and/or the like and includes digital medical images of subjects acquired by imaging modalities of the healthcare entity(s). The physical storage medium is local to the healthcare entity and/or remote therefrom such as part of "cloud" based resources. Examples of imaging modalities include magnetic resonance (MR), computed tomography (CT), single photon emission tomography (SPECT), positron emission tomography (PET), X-ray, etc. The digital medical images include series of two-dimensional (2-D) images (which collectively provide a three-dimensional (3-D) volumetric image dataset) and/or a 3-D volumetric image dataset. The digital medical images at least include images of vertebrae of the spine of a subject.

The computing apparatus 106 includes a processor 108 (e.g., a central processing unit (CPU), a microprocessor ( CPU), graphics processing unit (GPU), and/or other processor) and computer readable storage medium ("memory") 110 (which excludes transitory medium), such as a physical storage device like a hard disk drive, a solid-state drive, an optical disk, and/or the like. The memory 110 includes at least computer executable instructions 112 and data 114. The processor 108 is configured to execute the computer executable instructions 112. In one instance, the computing system 106 is configured to provide storage of, access to and/or processing for medical information including digital medical images, electronic reports, etc. An example of the computing apparatus 106 includes, but is not limited to, a picture archiving and communication system (PACS). Where the computing system 106 is a PACS, digital medical images and/or other electronic information are stored and/or transferred to and from via the DICOM (Digital Imaging and Communications in Medicine) format and/or another format(s).

The instructions 112 includes instructions at least for a vertebrae detection module 116. As described in greater detail below, in one embodiment, the vertebrae detection module 116 is configured to detect individual vertebra in images of the spine acquired in the sagittal plane ("sagittal images") and generate 2-D bounding boxes for the detected vertebrae, combine the sagittal images and the 2-D bounding boxes to generate a 3-D model of the spine with 3-D bounding boxes, generate a panoramic image of the detected vertebrae based on the 3-D model to create a straightened view of the spine, detect the individual vertebra in the panoramic image and generate 2-D bounding boxes for the detected vertebrae in the panoramic image, translate the 2-D bounding boxes to 3-D space, and, optionally, annotate a displayed 2-D image. As utilized herein, a bounding box bounds or encloses a vertebra, with or without partial overlap of one or more neighboring vertebrae. In one instance, the vertebrae detection module 116 reduces computing power for detection and labelling and/or improves an accuracy of vertebrae delineation, relative to a configuration without the vertebrae detection module 116.

An input device(s) 118, such as a keyboard, mouse, a touchscreen, etc., is in electrical communication with the computing system 102. In one instance, the input device(s) 118 is configured to allow a user to operate the computing system 102 via user input, including activating the vertebrae detection module 116, selecting volumetric image data and/or sagittal images to load, etc. A human readable output device(s) 120, such as a display, is also in electrical communication with the computing apparatus 106. In one instance, the output device(s) 120 is configured to display a 2-D image of a vertebra, prompt a user for input, present instructions, etc. Input/output ("I/O") 122 is configured for communication (wire and/or wireless) with at least the data repository(s) 104, including retrieving/receiving electronic data from and/or conveying data to the data repository(s) 104, the input device(s) 118 and/or the output device(s) 120.

FIG. 2 diagrammatically illustrates an example of the vertebrae detection module 116, in accordance with an embodiment(s) herein. The illustrated vertebrae detection module 116 includes a data pre-processor 200, a trained vertebrae detector 202, a 3-D model generator 204, a panoramic image generator 206, a 2-D to 3-D space translator 208, and an annotator 210.

The vertebrae detection module 116 receives, as input, image data of a spine scan of a subject, including a series of 2-D images (which collectively provide a 3-D volumetric dataset) and/or a 3-D volumetric dataset, or one or more sets of sagittal images generated from a series of 2-D images (which collectively provide a 3-D volumetric dataset) and/or a 3-D volumetric dataset. As discussed briefly herein, suitable datasets include MR, CT, SPECT, PET, X-ray, etc. In one instance, the particular image data is selected via a user input from the input device(s) 118.

The data pre-processor 200 is configured to process the input image data. In one instance, a result of the processing is one or more sets of sagittal slices. Parameters such as window width, window level, slice thickness, etc. are determined via user input and/or preprogrammed settings. Where multiple sets of sagittal slices are generated, in one instance, the window width, window level, and/or other parameter is the same for all of the slices. In another instance, at least two of the sets have at least one different parameter value. Window width refers to the range of CT numbers (in Hounsfield units (HU)) to display, and window level refers to the CT number at the midpoint of the range. An example of window width and level (W/L) settings for viewing the spine in an image that includes the spine is: W = 1800 HU and L = 400 HU. Where the input image data includes the one or more sets of sagittal images, the data pre-processor 200 is not utilized to process the input image data to create the one or more sets of sagittal images.

The trained vertebrae detector 202 is configured to process the one or more sets of sagittal slices. In one instance, this includes detecting whether a slice includes a vertebra and generating a 2-D bounding box for the detected vertebra. In one instance, the vertebra detection begins at a center slice and proceeds slice-by-slice in both directions to the outermost slices, i.e., a first and a last slice of the sagittal slices. The vertebra detection ends after all the slices have been processed, after predetermined stopping criteria is satisfied (e.g., after a pre-determined number of consecutive slices are processed without indicia of a vertebra, which indicates the spine is out of the data set), or other predetermined stopping criteria. In one instance, the predetermined stopping criteria reduces processing time, e.g., by limiting the number of slices processed.

Examples of suitable detectors include artificial intelligence based detectors, including neural network based detectors such as the faster region convolutional neural network described in Girshick et al., "Faster R-CNN: Towards Real-Time Object Detection with Region Proposal Networks," 2015, the You Only Look Once described in Redmon et al., "YOLOv3: An Incremental Improvement," 2018, and/or other detector(s). For sake of brevity and explanatory purposes, vertebra detection is described herein with a YOLOv3 detector. With a YOLOv3 detector, a neural network is applied to the image, the image is divided into regions, and bounding boxes and probabilities are predicted for each region, where the bounding boxes are weighted by the predicted probabilities.

With a YOLOv3 detector, a predetermined minimum confidence threshold is utilized to determine whether to generate a 2-D bounding box for an object detected as possibly a vertebra. In one instance, the minimum confidence threshold is 0.55. This means that 2-D bounding boxes will only be generated for vertebra detected with a confidence of 0.55 or higher. In another instance, the minimum confidence threshold is 0.50. In yet another instance, the minimum confidence threshold is a different value. A minimum confidence threshold of 0 will result in generating a 2-D bounding box for every object detected as possibly a vertebra. In general, a higher threshold improves specificity, whereas a lower threshold improves sensitivity.

The 3-D model generator 204 is configured to process the one or more sets of sagittal images and the 2-D bounding boxes. In one instance, this includes combining the 2-D bounding boxes across the sagittal slices to generate a 3-D model with 3-D bounding boxes for each detected vertebra. For sake of brevity and explanatory purposes, this is described herein using the density-based spatial clustering of applications with noise (DBSCAN) algorithm described in Ester et al., "A density-based algorithm for discovering clusters in large spatial databases with noise. Proceedings of the Second International Conference on Knowledge Discovery and Data Mining (KDD-96)," AAAI Press. pp. 226-231. DBSCAN is a density-based data clustering non-parametric algorithm, where, given a set of points in some space, points that are close to each other are clustered / grouped together, and points whose nearest neighbors are far away are considered outliers.

The panoramic image generator 206 is configured to process the 3-D model and the 3-D bounding boxes. In one instance, this includes generating a panoramic image using a curve through centers of the 3D bounding boxes. In one instance, the curve is extrapolated before the first vertebra and after the last vertebra. This allows the panoramic image generator 206 to add a vertebra(s) missing at the edges. The curve is interpolated and sampled at a pre-determined interval (e.g., 0.1, 0.5, 1.0, 2.5, etc. millimeters (mm)). For each point on the curve, a line from the 3-D model is sampled along the projection of a vector that goes from one side of the body to an opposing side, such as from a front of the body to a back of the body, onto a plane perpendicular to the curve at that point. The result is a panoramic (quasi-sagittal) image which contains the whole spine aligned vertically.

The trained vertebrae detector 202 is further configured to process the panoramic image. In one instance, this includes detecting vertebrae in the panoramic image and generating a 2-D bounding box around each detected vertebra. In one instance, the minimum confidence threshold is 0.50. Similar to the detection in the sagittal slices, the minimum confidence threshold can be a different value. In general, vertebra detection in the panoramic image should be more accurate than the detection with the sagittal slices at least since the spine is straightened and entirely displayed and any vertebrae missed using the sagittal images are now detected here. In one instance, this improves sensitivity without reducing specificity. In another embodiment, separate vertebrae detectors are utilized for detector vertebrae in the sagittal images and the panoramic image.

The 2-D to 3-D space translator 208 is configured to process the panoramic image having the 2-D bounding boxes. In one instance, this includes translating the 2-D bounding boxes to 3-D space and adding depth to each bounding box. For example, in one instance each corner of each bounding box is translated to 3-D space, and the bounding box of all four corners is set as the bounding box of the vertebra, where depth is set to be the same as the smaller edge of the 2-D bounding box, i.e. the smaller of the width or the height of the bounding box.

The trained vertebrae detector 202 is further configured to determine an identification of at least a sub-set of the identified vertebrae. For example, in one instance the trained vertebrae detector 202 identifies at least one cervical spine vertebra, multiple sacrum vertebrae and the other spine vertebrae, such as C2, S1, S2, S3, S4, S5, and another symbol or words for all the other vertebrae. Vertebrae other than C2 and S1-S5 (i.e. C3-C7, T1-T12, L1-L5, and/or the coccyx vertebrae) can be identified by counting back or forward from a reference identified vertebra. In another instance, a different combination of a sub-set of vertebrae is identified (e.g., C2, Sacrum, and other vertebra), only one vertebra is identified, or all of the vertebrae are identified.

The annotator 210 is configured to annotate a displayed 2-D image of the input volumetric image data. In one instance, the annotation is a projection of a center of a bounding box onto a current slice. By way of non-limiting example, in an axial slice that is off center, the annotator 210 projects the center from the central axial slice. Alternatively, or additionally, the annotator marks the intersection of the center line passing through the vertebra with the current plane. In another instance, the detected vertebrae are annotated by displaying vertebra labels next to each vertebra without any bounding box or center projection.

Variations are contemplated next.

In a variation, the entire algorithm is ran iteratively. For this, the sagittal slices are processed, bounding boxes are found, a 3-D model is generated, a panoramic image is generated, bounding boxes are determined for the panoramic image, the bounding boxes are translated to 3-D space, and the process is repeated until stopping criteria is satisfied.

In the above, the trained vertebrae detector 202 detects vertebrae in the sagittal images and the panoramic image. In a variation, separate trained vertebrae detectors respectively detect vertebrae in the sagittal images and the panoramic image.

The following describes a non-limiting example for training a vertebrae detector to create the trained vertebrae detector 202 for a single imaging modality. For sake of brevity and explanatory purposes, the training is described using CT. Sagittal images of the lumbar spine, thoracic spine and cervical spine for CT studies are annotated. All of the sagittal images are sampled in a same predetermined resolution with a same predetermined fixed spacing. For example, in one instance the sagittal images are sampled in a resolution of 416 x 416 with a pixel spacing of 1 mm. For a larger image, the image is divided into multiple regions and each region is sampled to cover all of the image.

The sagittal images with the 2-D bounding boxes are fed into training. The sagittal images with the 2-D bounding boxes are also augmented to produce additional training data. Examples of features that are augmented include one or more of the following: brightness, contrast, Gaussian noise, shift, scale, rotate and flip. For each feature, a probability of augmentation and an augmentation limit is predetermined. For instance, a probability 0.80 and an augmentation limit of 0.03 for brightness would result in the brightness being augmented in 80% of the images in a range of ±3% of the original value. Augmenting the sagittal images as such increases a diversity in the data and/or mitigates overfitting - memorization of the training data.

The training datasets are divided into training, testing, and validating subsets of a predetermined size. The CT training dataset is used to train the trained vertebrae detector 202 for vertebrae detection in CT image data. With a YOLOv3 based network, the vertebrae detector is iteratively trained until stopping criteria is satisfied. In one instance, the vertebrae detector is iteratively trained until an error between the original bounding boxes and the generated bounding boxes satisfies a predetermined value. The vertebrae detector is trained to detect all or a subset of the vertebrae.

In one instance, a validation data set is used during training to determine the stopping criteria. In this instance, the network weights are not affected by the validation stage, and a quality of the training is determined by examining metrics. For example, once training terminates, the network is ran on the test data set and metrics therefore are compared with metrics for the validation data set. If the metrics deviate within a predetermined tolerance, the training is considered effective and terminates.

Variations for training are contemplated next.

In a variation, the training images also include panoramic images that are based on the annotated vertebra centers and have the same resolution and pixel spacing. The feature augmentations may be different between the sagittal images and the panoramic images, e.g., panoramic images do not have shift and rotate augmentations.

In another variation, the vertebrae detector is trained for multiple imaging modalities. For sake of brevity and explanatory purposes, the training is described using CT and MR image data. With this variation, augmentation may vary across modality, e.g., the contrast limit for CT may be 0.30 whereas the contrast limit for MR may be 0.40. In one variation, the CT and MR datasets are used to train separate vertebrae detectors respectively to detect vertebrae in CT images and MR images. In another variation, the CT and MR datasets are used to train a CT+MR vertebrae detector for vertebrae detection in CT or MR image data.

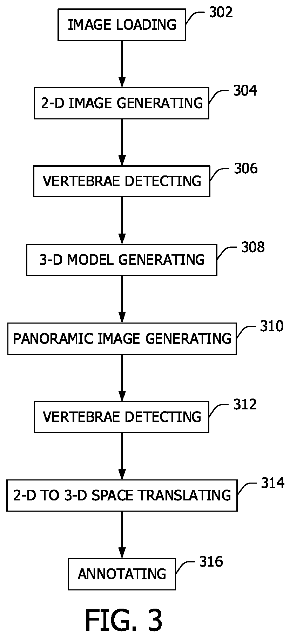

FIG. 3 diagrammatically illustrates an example method for detecting and labelling vertebrae of a spine in volumetric image data, in accordance with an embodiment(s) herein.

It is to be appreciated that the ordering of the acts of one or more of the method is not limiting. As such, other orderings are contemplated herein. In addition, one or more acts may be omitted, and/or one or more additional acts may be included.

An image loading step 302 loads volumetric image data, as described herein and/or otherwise.

A 2-D image generating step 304 generates one or more sets of sagittal images from the volumetric image data, as described herein and/or otherwise.

Alternatively, the loading step loads the one or more sets of sagittal images and step 304 is omitted, as described herein and/or otherwise.

A vertebrae detecting step 306 detects vertebrae in the one or more sets of sagittal images and generates 2-D bounding boxes therefor, as described herein and/or otherwise.

A 3-D model generating step 308 generates a 3-D model of the spine with 3-D bounding boxes from the sagittal images and 2-D bounding boxes, as described herein and/or otherwise.

A panoramic image generating step 310 generates a panoramic image based on the 3-D model, as described herein and/or otherwise.

A vertebrae detecting step 312 detects vertebrae in the panoramic image and generates 2-D bounding boxes therefor, as described herein and/or otherwise.

A 2-D to 3-D translating step 314 translates the 2-D bounding boxes for the vertebrae in the panoramic image to 3-D space, as described herein and/or otherwise.

An annotating step 316 annotates a displayed 2-D image of the volumetric image data, as described herein and/or otherwise.

The above methods can be implemented by way of computer readable instructions, encoded, or embedded on the computer readable storage medium 110, which, when executed by a computer processor(s), cause the processor(s) 108 to carry out the described acts. Additionally, or alternatively, at least one of the computer readable instructions is carried out by a signal, carrier wave or other transitory medium, which is not computer readable storage medium.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

The word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A system (102) configured to detect vertebrae of a spine in volumetric image data, comprising:
a computing apparatus (106), comprising:
a memory (110) including instructions (112) for a vertebrae detection module (116);
a processor (108) configured to execute the instructions to perform a two stage vertebrae detection in which a first set of bounding boxes for the vertebrae are detected in sagittal images and clustered in the volumetric image data in a first stage of the two stage vertebrae detection, a panoramic image of the spine is generated based on the detected first set of bounding boxes, and a second set of bounding boxes for the vertebrae are detected in the panoramic image in a second stage of the two stage vertebrae detection; and
a display (120) configured to display a 2-D image from the volumetric image data of a detected vertebra;
wherein the vertebrae detection module detects the first set of bounding boxes based on a first predetermined confidence level and generates 2-D bounding boxes for detected vertebrae;
wherein the vertebrae detection module combines the sagittal images and the 2-D bounding boxes to generate a 3-D model with 3-D bounding boxes;
wherein the vertebrae detection module generates a curve through centers of the 3-D bounding boxes;
wherein the vertebrae detection module, for each point on the curve, samples a line from the 3-D model along a projection of a vector which goes from a front of the spine to a back of the spine onto a plane perpendicular to the curve at that point to produce the panoramic image, which includes a quasi-sagittal image that contains the whole spine aligned vertically;
wherein the vertebrae detection module detects the second set of bounding boxes based on a second predetermined confidence level and generates 2-D bounding boxes for the detected vertebrae; and
wherein the vertebrae detection module translates the 2-D bounding boxes of the panoramic image to 3-D space to define 3-D bounding boxes for the vertebrae.

2. The system of claim 1, wherein the vertebrae detection module includes a neural network trained to detect vertebrae.

3. The system of any one of claims 1 to 2, wherein the vertebrae detection module detects the first set of bounding boxes beginning with a central image of the sagittal images and moving outwards in both directions towards a first image of the sagittal images and a last image of the sagittal images until stopping criteria is satisfied.

4. The system of claim 3, wherein the stopping criteria includes a predetermined number of consecutive images of the sagittal images in which no vertebra is detected.

5. The system of any one of claims 1 to 4, wherein the vertebrae detection module labels each vertebra of the first set of bounding boxes as Sacrum, C2 or other vertebra.

6. The system of any one of claims 1 to 5, wherein the vertebrae detection module extrapolates the curve before a first vertebra and after a last vertebra to add missing vertebrae.

7. The system of any one of claims 1 to 6, wherein the vertebrae detection module labels each vertebra of the second set of bounding boxes as Sacrum, C2 or other vertebra.

8. The system of any one of claims 1 to 7, wherein the computing apparatus is a picture archiving communication system (PACS).

9. A system (102) configured to detect vertebrae of a spine in volumetric image data, comprising:
a computing apparatus (106), comprising:
a memory (110) including instructions (112) for a vertebrae detection module (116);
a processor (108) configured to execute the instructions to perform a two-stage vertebrae detection in which a first set of bounding boxes for the vertebrae are detected in sagittal images and clustered in the volumetric image data in a first stage of the two stage vertebrae detection, a panoramic image of the spine is generated based on the detected first set of bounding boxes, and a second set of bounding boxes for the vertebrae are detected in the panoramic image in a second stage of the two stage vertebrae detection; and
a display (120) configured to display a 2-D image from the volumetric image data of a detected vertebra;
wherein the vertebrae detection module detects the first set of bounding boxes based on a first predetermined confidence level and generates 2-D bounding boxes for detected vertebrae;
wherein the vertebrae detection module combines the sagittal images and the 2-D bounding boxes to generate a 3-D model with 3-D bounding boxes;
wherein the vertebrae detection module generates a curve through centers of the 3-D bounding boxes;
wherein the vertebrae detection module, for each point on the curve, samples a line from the 3-D model along a projection of a vector which goes from a front of the spine to a back of the spine onto a plane perpendicular to the curve at that point to produce the panoramic image, which includes a quasi-sagittal image, that contains the whole spine aligned vertically;
wherein the vertebrae detection module detects the second set of bounding boxes in the panoramic image based on a second predetermined confidence level and generates 2-D bounding boxes for the detected vertebrae; and
wherein the vertebrae detection module extrapolates the curve, before a first vertebra and after a last vertebra, to add missing vertebrae.

10. A computer-implemented method for detecting vertebrae of a spine in volumetric image data, comprising:
extracting a first set of bounding boxes for vertebrae in sagittal images of the spine, and clustering the first set of bounding boxes into 3D boxes in the volumetric image;
generating a curve through centers of the 3-D bounding boxes and, for each point on the curve, sampling a line from the 3-D model along a projection of a vector which goes from a front of the spine to a back of the spine onto a plane perpendicular to the curve at that point to produce a panoramic image, which includes a quasi-sagittal image that contains the whole spine aligned vertically; and
extracting a second set of bounding boxes for the vertebrae in the panoramic image; and
further comprising:
wherein extracting the first set of bounding boxes is based on a first predetermined confidence level and generates 2-D bounding boxes for detected vertebrae:
wherein extracting the second set of bounding boxes in the panoramic image, is based on a second predetermined confidence level and generates a second set of 2-D bounding boxes; and
translating the 2-D bounding boxes in the panoramic image to 3-D space to define 3-D bounding boxes for the vertebrae; and
annotating the vertebrae of the 3-D bounding boxes.

11. The computer-implemented method of claim 10, wherein extracting the first set of bounding boxes includes:
detecting the first set of bounding boxes beginning with a center image of the sagittal images and moving outward to a first image of the sagittal images and a last image of the sagittal images; and
terminating detection in response to a predetermined number of consecutive sagittal images having no vertebra;
generating 2-D bounding boxes for the detected vertebrae;
identifying centers of the 2-D bounding boxes; and
annotating the vertebrae of the 2-D bounding boxes.

12. A computer-readable storage medium comprising instructions which, when executed by a computer, cause the computer to carry out the method of any one of claims 10 to 11.

13. The computer-readable storage medium of claim 12, wherein the computer executable instructions further cause the processor to:
detect the first set of bounding boxes beginning with a center image of the sagittal images and moving outward to a first image of the sagittal images and a last image of the sagittal images;
terminate detection in response to a predetermined number of consecutive sagittal images having no vertebra;
generate 2-D bounding boxes for the detected vertebrae;
identify centers of the 2-D bounding boxes; and
annotate the vertebrae of the 2-D bounding boxes.

14. A computer program product comprising instructions which, when the program is executed by a computer, cause the computer to carry out the steps of the method of any one of claims 10-11.

## Patentansprüche

1. System (102), das dazu ausgelegt ist, Wirbel einer Wirbelsäule in volumetrischen Bilddaten zu detektieren, umfassend:
eine Recheneinrichtung (106), die umfasst:
einen Speicher (110), der Anweisungen (112) für ein Wirbeldetektionsmodul (116) beinhaltet;
einen Prozessor (108), der dazu ausgelegt ist, die Anweisungen auszuführen, um eine zweistufige Wirbeldetektion durchzuführen, bei der, in einer ersten Stufe der zweistufigen Wirbeldetektion, ein erster Satz von Begrenzungsrahmen für die Wirbel in sagittalen Bildern detektiert und in den volumetrischen Bilddaten gruppiert wird und, in einer zweiten Stufe der zweistufigen Wirbeldetektion, ein Panoramabild der Wirbelsäule basierend auf dem detektierten ersten Satz von Begrenzungsrahmen erzeugt und ein zweiter Satz von Begrenzungsrahmen für die Wirbel im Panoramabild detektiert wird; und
eine Anzeige (120), die dazu ausgelegt ist, ein 2-D-Bild aus den volumetrischen Bilddaten eines detektierten Wirbels anzuzeigen;
wobei das Wirbeldetektionsmodul den ersten Satz von Begrenzungsrahmen basierend auf einem ersten vorbestimmten Konfidenzniveau detektiert und 2-D-Begrenzungsrahmen für detektierte Wirbel erzeugt;
wobei das Wirbeldetektionsmodul die sagittalen Bilder und die 2-D-Begrenzungsrahmen kombiniert, um ein 3-D-Modell mit 3-D-Begrenzungsrahmen zu erzeugen;
wobei das Wirbeldetektionsmodul eine Kurve durch Zentren der 3-D-Begrenzungsrahmen erzeugt;
wobei das Wirbeldetektionsmodul, für jeden Punkt auf der Kurve, eine Linie vom 3-D-Modell entlang einer Projektion eines Vektors, der von einer Vorderseite der Wirbelsäule zu einer Rückseite der Wirbelsäule geht, auf eine Ebene senkrecht zur Kurve an diesem Punkt abtastet, um das Panoramabild zu erzeugen, das ein quasi-sagittales Bild beinhaltet, das die gesamte Wirbelsäule enthält, die vertikal ausgerichtet ist;
wobei das Wirbeldetektionsmodul den zweiten Satz von Begrenzungsrahmen basierend auf einem zweiten vorbestimmten Konfidenzniveau detektiert und 2-D-Begrenzungsrahmen für die detektierten Wirbel erzeugt und wobei das Wirbeldetektionsmodul die 2-D-Begrenzungsrahmen des Panoramabilds in einen 3-D-Raum translatiert, um 3-D-Begrenzungsrahmen für die Wirbel zu definieren.

2. System nach Anspruch 1, wobei das Wirbeldetektionsmodul ein neuronales Netzwerk beinhaltet, das trainiert ist, um Wirbel zu detektieren.

3. System nach einem der Ansprüche 1 bis 2, wobei das Wirbeldetektionsmodul den ersten Satz von Begrenzungsrahmen detektiert, beginnend mit einem zentralen Bild der sagittalen Bilder und sich nach außen in beide Richtungen zu einem ersten Bild der sagittalen Bilder und einem letzten Bild der sagittalen Bilder bewegend, bis Stoppkriterien erfüllt sind.

4. System nach Anspruch 3, wobei die Stoppkriterien eine vorbestimmte Anzahl aufeinanderfolgender Bilder der sagittalen Bilder, in denen kein Wirbel detektiert wird, beinhalten.

5. System nach einem der Ansprüche 1 bis 4, wobei das Wirbeldetektionsmodul jeden Wirbel des ersten Satzes von Begrenzungsrahmen als Sacrum, C2 oder andere Wirbel kennzeichnet.

6. System nach einem der Ansprüche 1 bis 5, wobei das Wirbeldetektionsmodul die Kurve vor einem ersten Wirbel und nach einem letzten Wirbel extrapoliert, um fehlende Wirbel hinzuzufügen.

7. System nach einem der Ansprüche 1 bis 6, wobei das Wirbeldetektionsmodul jeden Wirbel des zweiten Satzes von Begrenzungsrahmen als Sacrum, C2 oder andere Wirbel kennzeichnet.

8. System nach einem der Ansprüche 1 bis 7, wobei die Recheneinrichtung ein Bildarchivierungskommunikationssystem (PACS) ist.

9. System (102), das dazu ausgelegt ist, Wirbel einer Wirbelsäule in volumetrischen Bilddaten zu detektieren, umfassend:
eine Recheneinrichtung (106), die umfasst:
einen Speicher (110), der Anweisungen (112) für ein Wirbeldetektionsmodul (116) beinhaltet;
einen Prozessor (108), der dazu ausgelegt ist, die Anweisungen auszuführen, um eine zweistufige Wirbeldetektion durchzuführen, bei der, in einer ersten Stufe der zweistufigen Wirbeldetektion, ein erster Satz von Begrenzungsrahmen für die Wirbel in sagittalen Bildern detektiert und in den volumetrischen Bilddaten gruppiert wird und, in einer zweiten Stufe der zweistufigen Wirbeldetektion, ein Panoramabild der Wirbelsäule basierend auf dem detektierten ersten Satz von Begrenzungsrahmen erzeugt und ein zweiter Satz von Begrenzungsrahmen für die Wirbel im Panoramabild detektiert wird; und
eine Anzeige (120), die dazu ausgelegt ist, ein 2-D-Bild aus den volumetrischen Bilddaten eines detektierten Wirbels anzuzeigen;
wobei das Wirbeldetektionsmodul den ersten Satz von Begrenzungsrahmen basierend auf einem ersten vorbestimmten Konfidenzniveau detektiert und 2-D-Begrenzungsrahmen für detektierte Wirbel erzeugt;
wobei das Wirbeldetektionsmodul die sagittalen Bilder und die 2-D-Begrenzungsrahmen kombiniert, um ein 3-D-Modell mit 3-D-Begrenzungsrahmen zu erzeugen;
wobei das Wirbeldetektionsmodul eine Kurve durch Zentren der 3-D-Begrenzungsrahmen erzeugt;
wobei das Wirbeldetektionsmodul, für jeden Punkt auf der Kurve, eine Linie vom 3-D-Modell entlang einer Projektion eines Vektors, der von einer Vorderseite der Wirbelsäule zu einer Rückseite der Wirbelsäule geht, auf eine Ebene senkrecht zur Kurve an diesem Punkt abtastet, um das Panoramabild zu erzeugen, das ein quasi-sagittales Bild beinhaltet, das die gesamte Wirbelsäule enthält, die vertikal ausgerichtet ist;
wobei das Wirbeldetektionsmodul den zweiten Satz von Begrenzungsrahmen im Panoramabild basierend auf einem zweiten vorbestimmten Konfidenzniveau detektiert und 2-D-Begrenzungsrahmen für die detektierten Wirbel erzeugt und
wobei das Wirbeldetektionsmodul die Kurve vor einem ersten Wirbel und nach einem letzten Wirbel extrapoliert, um fehlende Wirbel hinzuzufügen.

10. Computerimplementiertes Verfahren zum Detektieren von Wirbeln einer Wirbelsäule in volumetrischen Bilddaten, umfassend:
Extrahieren eines ersten Satzes von Begrenzungsrahmen für Wirbel in sagittalen Bildern der Wirbelsäule und Gruppieren des ersten Satzes von Begrenzungsrahmen in 3-D-Rahmen im volumetrischen Bild;
Erzeugen einer Kurve durch Zentren der 3-D-Begrenzungsrahmen und, für jeden Punkt auf der Kurve, Abtasten einer Linie vom 3-D-Modell entlang einer Projektion eines Vektors, der von einer Vorderseite der Wirbelsäule zu einer Rückseite der Wirbelsäule geht, auf eine Ebene senkrecht zur Kurve an diesem Punkt, um ein Panoramabild zu erzeugen, das ein quasi-sagittales Bild beinhaltet, das die gesamte Wirbelsäule enthält, die vertikal ausgerichtet ist; und
Extrahieren eines zweiten Satzes von Begrenzungsrahmen für die Wirbel im Panoramabild; und
ferner umfassend:
wobei das Extrahieren des ersten Satzes von Begrenzungsrahmen auf einem ersten vorbestimmten Konfidenzniveau basiert und 2-D-Begrenzungsrahmen für detektierte Wirbel erzeugt;
wobei das Extrahieren des zweiten Satzes von Begrenzungsrahmen im Panoramabild auf einem zweiten vorbestimmten Konfidenzniveau basiert und einen zweiten Satz von 2-D-Begrenzungsrahmen erzeugt; und
Translatieren der 2-D-Begrenzungsrahmen im Panoramabild in den 3-D-Raum, um 3-D-Begrenzungsrahmen für die Wirbel zu definieren; und
Annotieren der Wirbel der 3-D-Begrenzungsrahmen.

11. Computerimplementiertes Verfahren nach Anspruch 10, wobei das Extrahieren des ersten Satzes von Begrenzungsrahmen beinhaltet:
Detektieren des ersten Satzes von Begrenzungsrahmen, beginnend mit einem Zentrumsbild der sagittalen Bilder und sich nach außen zu einem ersten Bild der sagittalen Bilder und einem letzten Bild der sagittalen Bilder bewegend, und
Beenden der Detektion als Reaktion auf eine vorbestimmte Anzahl aufeinanderfolgender sagittaler Bilder ohne Wirbel;
Erzeugen von 2-D-Begrenzungsrahmen für die detektierten Wirbel;
Identifizieren von Zentren der 2-D-Begrenzungsrahmen und Annotieren der Wirbel der 2-D-Begrenzungsrahmen.

12. Computerlesbares Speicherungsmedium, umfassend Anweisungen, die bei Ausführung durch einen Computer den Computer zum Ausführen des Verfahrens nach einem der Ansprüche 10 bis 11 veranlassen.

13. Computerlesbares Speicherungsmedium nach Anspruch 12, wobei die computerausführbaren Anweisungen ferner den Prozessor veranlassen zum:
Detektieren des ersten Satzes von Begrenzungsrahmen, beginnend mit einem Zentrumsbild der sagittalen Bilder und sich nach außen zu einem ersten Bild der sagittalen Bilder und einem letzten Bild der sagittalen Bilder bewegend;
Beenden der Detektion als Reaktion auf eine vorbestimmte Anzahl aufeinanderfolgender sagittaler Bilder ohne Wirbel;
Erzeugen von 2-D-Begrenzungsrahmen für die detektierten Wirbel;
Identifizieren von Zentren der 2-D-Begrenzungsrahmen und Annotieren der Wirbel der 2-D-Begrenzungsrahmen.

14. Computerprogrammprodukt, umfassend Anweisungen, die bei Ausführung des Programms durch einen Computer den Computer zum Ausführen der Schritte des Verfahrens nach einem der Ansprüche 10 bis 11 veranlassen.

## Revendications

1. Système (102) configuré pour détecter des vertèbres d'une colonne vertébrale dans des données d'images volumétriques, le système comprenant :
un appareil informatique (106), comprenant :
une mémoire (110) incluant des instructions (112) d'un module de détection de vertèbres (116) ;
un processeur (108) configuré pour exécuter les instructions pour effectuer une détection de vertèbres en deux temps où un premier ensemble de boîtes englobantes pour les vertèbres sont détectées dans des images sagittales et regroupées dans les données d'images volumétriques dans un premier temps de la détection de vertèbres en deux temps, une image panoramique de la colonne vertébrale est générée sur la base du premier ensemble de boîtes englobantes détectées, et un deuxième ensemble de boîtes englobantes pour les vertèbres sont détectées dans l'image panoramique dans un deuxième temps de la détection des vertèbres en deux temps ; et
un afficheur (120) configuré pour afficher une image 2D à partir des données d'images volumétriques d'une vertèbre détectée ;
dans lequel le module de détection de vertèbres détecte le premier ensemble de boîtes englobantes sur la base d'un premier niveau de confiance prédéterminé et génère des boîtes englobantes 2D pour les vertèbres détectées ;
dans lequel le module de détection de vertèbres combine les images sagittales et les boîtes englobantes 2D pour générer un modèle 3D avec des boîtes englobantes 3D ;
dans lequel le module de détection de vertèbres génère une courbe passant par les centres des boîtes englobantes 3D ;
dans lequel le module de détection de vertèbres échantillonne, pour chaque point de la courbe, une ligne du modèle 3D le long d'une projection d'un vecteur qui va de l'avant de la colonne vertébrale vers l'arrière de la colonne vertébrale sur un plan perpendiculaire à la courbe à ce point pour produire l'image panoramique, qui comporte une image quasi-sagittale qui contient toute la colonne vertébrale alignée verticalement ;
dans lequel le module de détection de vertèbres détecte le deuxième ensemble de boîtes englobantes sur la base d'un deuxième niveau de confiance prédéterminé et génère des boîtes englobantes 2D pour les vertèbres détectées ; et
dans lequel le module de détection de vertèbres traduit les boîtes englobantes 2D de l'image panoramique en un espace 3D afin de définir des boîtes englobantes 3D pour les vertèbres.

2. Système selon la revendication 1, dans lequel le module de détection de vertèbres comprend un réseau neuronal formé pour détecter des vertèbres.

3. Système selon l'une quelconque des revendications 1 et 2, dans lequel le module de détection de vertèbres détecte le premier ensemble de boîtes englobantes commençant par une image centrale des images sagittales et se déplaçant vers l'extérieur dans les deux directions vers une première image des images sagittales et une dernière image des images sagittales jusqu'à ce que le critère d'arrêt soit satisfait.

4. Système selon la revendication 3, dans lequel le critères d'arrêt comprend un nombre prédéterminé d'images consécutives des images sagittales dans lesquelles aucune vertèbre n'est détectée.

5. Système selon l'une quelconque des revendications 1 à 4, dans lequel le module de détection de vertèbres marque chaque vertèbre du premier ensemble de boîtes englobantes en tant que Sacrum, C2 ou une autre vertèbre.

6. Système selon l'une quelconque des revendications 1 à 5, dans lequel le module de détection de vertèbres extrapole la courbe avant une première vertèbre et après une dernière vertèbre pour ajouter des vertèbres manquantes.

7. Système selon l'une quelconque des revendications 1 à 6, dans lequel le module de détection de vertèbres marque chaque vertèbre du deuxième ensemble de boîtes englobantes en tant que Sacrum, C2 ou une autre vertèbre.

8. Système selon l'une quelconque des revendications 1 à 7, dans lequel l'appareil informatique est un système de communication d'archivage d'images (PACS).

9. Système (102) configuré pour détecter des vertèbres d'une colonne vertébrale dans des données d'images volumétriques, le système comprenant :
un appareil informatique (106), comprenant :
une mémoire (110) incluant des instructions (112) d'un module de détection de vertèbres (116) ;
un processeur (108) configuré pour exécuter les instructions pour effectuer une détection de vertèbres en deux temps où un premier ensemble de boîtes englobantes pour les vertèbres sont détectées dans des images sagittales et regroupées dans les données d'images volumétriques dans un premier temps de la détection de vertèbres en deux temps, une image panoramique de la colonne vertébrale est générée sur la base du premier ensemble de boîtes englobantes détectées, et un deuxième ensemble de boîtes englobantes des vertèbres sont détectées dans l'image panoramique dans un deuxième temps de la détection des vertèbres en deux temps ; et
un afficheur (120) configuré pour afficher une image 2D à partir des données d'images volumétriques d'une vertèbre détectée ;
dans lequel le module de détection de vertèbres détecte le premier ensemble de boîtes englobantes sur la base d'un premier niveau de confiance prédéterminé et génère des boîtes englobantes 2D pour les vertèbres détectées ;
dans lequel le module de détection de vertèbres combine les images sagittales et les boîtes englobantes 2D pour générer un modèle 3D avec des boîtes englobantes 3D ;
dans lequel le module de détection de vertèbres génère une courbe passant par les centres des boîtes englobantes 3D ;
dans lequel le module de détection de vertèbres échantillonne, pour chaque point de la courbe, une ligne du modèle 3D le long d'une projection d'un vecteur qui va de l'avant de la colonne vertébrale vers l'arrière de la colonne vertébrale sur un plan perpendiculaire à la courbe à ce point pour produire l'image panoramique, qui comporte une image quasi-sagittale qui contient toute la colonne vertébrale alignée verticalement ;
dans lequel le module de détection des vertèbres détecte le deuxième ensemble de boîtes englobantes dans l'image panoramique sur la base d'un deuxième niveau de confiance prédéterminé et génère des boîtes englobantes 2D pour les vertèbres détectées ; et
dans lequel le module de détection de vertèbres extrapole la courbe, avant une première vertèbre et après une dernière vertèbre, pour ajouter les vertèbres manquantes.

10. Procédé mis en œuvre par ordinateur destiné à la détection de vertèbres d'une colonne vertébrale dans des données d'images volumétriques, le procédé comprenant les étapes suivantes :
extraire un premier ensemble de boîtes englobantes pour les vertèbres dans les images sagittales de la colonne vertébrale, et regrouper le premier ensemble de boîtes englobantes dans des boîtes 3D dans l'image volumétrique ;
générer une courbe passant par les centres des boîtes englobantes 3D et, pour chaque point de la courbe, échantillonner une ligne à partir du modèle 3D le long d'une projection d'un vecteur qui va de l'avant de la colonne vertébrale à l'arrière de la colonne vertébrale sur un plan perpendiculaire à la courbe à ce point pour produire une image panoramique, qui inclut une image quasi sagittale qui contient l'ensemble de la colonne vertébrale alignée verticalement ; et
extraire un deuxième ensemble de boîtes englobantes pour les vertèbres dans l'image panoramique ; et
comprenant en outre :
dans lequel l'extraction du premier ensemble de boîtes englobantes est basée sur un premier niveau de confiance prédéterminé et génère des boîtes englobantes 2D pour les vertèbres détectées ;
dans lequel l'extraction du deuxième ensemble de boîtes englobantes dans l'image panoramique est basée sur un deuxième niveau de confiance prédéterminé et génère un deuxième ensemble de boîtes englobantes 2D ; et
traduire les boîtes englobantes 2D dans l'image panoramique dans l'espace 3D afin de définir des boîtes englobantes 3D pour les vertèbres ; et
annoter les vertèbres des boîtes englobantes 3D.

11. Procédé mis en œuvre par ordinateur selon la revendication 10, dans lequel l'extraction du premier ensemble de boîtes englobantes comprend les étapes suivantes :
détecter le premier ensemble de boîtes englobantes commençant par une image centrale des images sagittales et allant vers l'extérieur vers une première image des images sagittales et une dernière image des images sagittales ; et
terminer la détection en réponse à un nombre prédéterminé d'images sagittales consécutives ne présentant pas de vertèbre ;
générer des boîtes englobantes 2D pour les vertèbres détectées ;
identifier les centres des boîtes englobantes 2D ; et
annoter les vertèbres des boîtes englobantes 2D.

12. Support de stockage lisible par ordinateur comprenant des instructions qui, lorsqu'elles sont exécutées par un ordinateur, amènent l'ordinateur à exécuter le procédé selon l'une quelconque des revendications 10 et 11.

13. Support de stockage lisible par ordinateur selon la revendication 12, dans lequel les instructions exécutables par ordinateur amènent en outre le processeur à :
détecter le premier ensemble de boîtes englobantes commençant par une image centrale des images sagittales et allant vers l'extérieur vers une première image des images sagittales et une dernière image des images sagittales ;
terminer la détection en réponse à un nombre prédéterminé d'images sagittales consécutives ne présentant pas de vertèbre ;
générer des boîtes englobantes 2D pour les vertèbres détectées ;
identifier les centres des boîtes englobantes 2D ; et
annoter les vertèbres des boîtes englobantes 2D.

14. Produit programme informatique comprenant des instructions qui, lorsque le programme est exécuté par un ordinateur, amènent l'ordinateur à exécuter les étapes du procédé selon l'une quelconque des revendications 10 et 11.
